# EUROPÄISCHE PATENTSCHRIFT

(11) **EP 0 429 516 B1**
(45) Veröffentlichungstag und Bekanntmachung des Hinweises auf die Patenterteilung: **10.03.1993**
(21) Anmeldenummer: 89909555.8
(22) Anmeldetag: 11.08.1989
(51) Int. Cl.: B29C 47/54, B29C 47/80, B29C 47/86

(54) **VORRICHTUNG UND VERFAHREN ZUR FORMGEBUNG VON HALBZEUG AUS HOCHMOLEKULAREN KUNSTSTOFFEN**
DEVICE AND PROCESS FOR SHAPING SEMI-FINISHED PRODUCTS FROM HIGH MOLECULAR WEIGHT PLASTICS
DISPOSITIF ET PROCEDE POUR FACONNER DES DEMI-PRODUITS A PARTIR DE PLASTIQUES A POIDS MOLECULAIRE ELEVE

(30) Priorität: 16.08.1988 DE 3827772
(43) Veröffentlichungstag der Anmeldung: 05.06.1991
(73) Patentinhaber: ENGEL, Thomas, F-06140 Vence (FR)
(72) Erfinder: ENGEL, Thomas, F-06140 Vence (FR)
(74) Vertreter: Wolgast, Rudolf, Dipl.-Chem. Dr.
(86) Internationale Anmeldenummer: EP8900954
(87) Internationale Veröffentlichungsnummer: WO9002034

(56) Entgegenhaltungen:
- EP-A- 0 033 587
- EP-A- 0 034 870
- EP-A- 0 272 606
- EP-A- 0 319 435
- DE-A- 2 017 710
- DE-A- 2 830 352
- DE-C- 917 452
- US-A- 2 566 293
- US-A- 3 281 900
- US-A- 3 480 997
- US-A- 3 887 319

## Beschreibung

Die Erfindung betrifft eine Vorrichtung zur Formgebung von Halbzeug aus hochmolekularem Kunststoff, enthaltend eine Druckkammer mit einem ersten Teil, der an eine Fülleinrichtung zur Zufuhr des hochmolekularen Kunststoffes angeschlossen ist und einen oszillierenden Kolben zur adiabatischen Kompression des hochmolekularen Kunststoffes enthält, und mit einem abgebogenen zweiten Teil, der von einer Umlenkung ausgeht, die einen Strömungswiderstand bildet, einen Kern, der sich von dem Bereich der Umlenkung durch den abgebogenen zweiten Teil der Druckkammer erstreckt, eine an den abgebogenen zweiten Teil der Druckkammer angeschlossene, von einem Mantel umschlossene Heizkammer und ein Formwerkzeug, das mit dem der Druckkammer abgewandten Ende der Heizkammer verbunden ist.

Die Erfindung betrifft auch ein Verfahren zur Herstellung von Halbzeug vorgegebener Form aus hochmolekularen Kunststoffen, bei dem der hochmolekulare Kunststoff unter Einwirkung eine oszillierenden Kolbens in einem ersten Teil einer Druckkammer adiabatisch komprimiert und anschliessend nacheinander gegen den Strömungswiderstand einer Umlenkung durch einen abgebogenen zweiten Teil der Druckkammer und darin um einen Kern, der sich von dem Bereich der Umlenkung durch den abgebogenen zweiten Teil der Druckkammer erstreckt, in eine Heizkammer und durch einen Innenkanal zwischen einem Mantel und einem mit dem Kern verbundenen Innenkörper der Heizkammer und durch ein Formwerkzeug gefördert wird.

### Zugrundeliegender Stand der Technik

Eine solche Vorrichtung und ein solches Verfahren sind allgemein aus dem deutschen Patent Nr. 28 30 352 bekannt und dienen dort zur Herstellung von Rohren aus vernetzbaren thermoplastischen Kunststoffen.

Es sind hochmolekulare und auch sogenannte ultrahochmolekulare Kunststoffe besonders aus Polyethylen bekannt, die sich durch besonders vorteilhafte Eigenschaften im Gebrauch auszeichnen. Insbesondere solche ultrahochmolekularen Werkstoffe haben sich jedoch als schwierig für die Verarbeitung erwiesen, weil diese Kunstststoffe nicht schmelzbar sind und auch nicht plastifizierbar sind wie zum Beispiel thermoplastische Kunststoffe, so daß die gängigen Verarbeitungsverfahren für diese Stoffe nicht eingesetzt werden können. Dies gilt insbesondere für die gebräuchlichen Extrusionsanlagen, mit denen üblicherweise Halbzeug aus thermoplastischem Kunstoff mit vorgegebenen Profilen hergestellt wird. Auch bei der Verarbeitung hochmolekularer Kunststoffe, die sich schmelzen oder zumindest plastifizieren und dann ähnlich wie thermoplastische Kunststoffe verarbeiten lassen, ergeben sich insofern Probleme als das so hergestellte Halbzeug nicht frei von mechanischen Spannungen ist.

Ein bekanntes Verfahren zur Herstellung von Halbzeug und anderen Gegenständen aus ultrahochmolekularem Polyethylen besteht darin, das üblicherweise pulverförmige Material zu einem Preßkörper zu verformen und diesen Preßkörper spanabhebend zu bearbeiten, um das gewünschte Profil zu erhalten. Es entsteht bei diesem Verfahren jedoch ein Material mit hohen inneren mechanischen Spannungen, so daß anschließend an die Preßformung und die spanabhebende Bearbeitung noch eine Temperung erforderlich wird. Insgesamt hat sich eine solche Verfahrensweise jedoch als ungünstig erwiesen, weil dazu mehrere Verfahrensstufen erforderlich sind, die erhebliche Zeit beanspruchen und daher das ganze Verfahren zeitaufwendig und daher unwirtschaftlich machen.

Es ist zum Beispiel aus der US-A-3 887 319 bekannt, solches Material nach dem Ram-Extrusionsverfahren zu verarbeiten. Dazu wird das Material mit einem hin- und hergehenden Kolben in einer Vordruckkammer adiabatisch komprimiert und durch eine unmittelbar anschließende, koaxial dazu verlaufende, auf 121° C bis 218° C, optimal auf 216° C beheizte Vorheizkammer und von dort durch ein gegenüber der Vordruckkammer im Querschnitt im Verhältnis 3 : 1 verringertes, koaxial angeordnetes Strangpreßwerkzeug gefördert. Die beheizte Druckkammer enthält zwei in Förderrichtung hintereinander angeordnete, kreuzförmige und um 45° im Winkel gegeneinander versetzte Verteiler. Dadurch bildet das am Ausgang der beheizten Druckkammer bzw. vor dem Eingang des Strangpreßwerkzeuges anstehende Material eine homogene, erweichte, teigige Masse. Das langgestreckte Strangpreßwerkzeug wird über einen wesentlichen Teil seiner Länge anschließend an die Vorheizkammer auf eine Temperatur im Bereich von 149° C bis 177° C erwärmt.

### Offenbarung der Erfindung

Der Erfindung liegt die Aufgabe zugrunde, eine Vorrichtung und ein Verfahren zu schaffen, die eine zeitsparende und damit wirtschaftliche Verarbeitung von hochmolekularen, auch ultrahochmolekularen Kunststoffen ermöglichen, und unmittelbar zu Produkten führen, die frei von mechanischen Spannungen sind.

Hinsichtlich der erfindungsgemäßen Vorrichtung ist die Lösung dieser Aufgabe gekennzeichnet durch eine zwischen dem der Druckkammer abgewandten Ende der Heizkammer und dem Formwerkzeug angeordnete Lochplatte mit gleichmäßig über deren Querschnitt verteilten Durchtrittskanälen zur Ausbildung eines Staudruckes und zur Aufspaltung des durch die Heizkammer gegen den an der Lochplatte ausgebildeten Staudruck geförderten hochmolekularen Kunststoffes in eine Anzahl von Materialsträngen, die der Zahl der Durchtrittskanäle in der Lochplatte entspricht,
einen die Heizkammer durchsetzenden Innenkörper, der mit dem Mantel mindestens einen Transportweg von geringem Durchtrittsquerschnitt bestimmt, entlang dem der gegen den an der Lochplatte ausgebildeten Staudruck geförderte, hochmolekulare Kunststoff unter Erhaltung seines im wesentlichen kristallinen Zustandes auf eine Temperatur mindestens im Erweichungsbereich des hochmolekularen Kunststoffes erwärmbar ist, und
ein im Innenraum des Formwerkzeuges ausgebildeter, der Lochplatte in Förderrichtung folgender Entspannungsraum, in dem sich die Materialstränge des hochmolekularen Kunststoffes unter Entspannung und Ausdehnung zu einer erweichten Masse vereinigen.

Hinsichtlich des erfingungsgemäßen Verfahrens wird die vorgenannte Aufgabe dadurch gelöst,
daß der adiabatisch komprimierte hochmolekulare Kunststoff durch die Heizkammer gegen einen Staudruck, der durch eine Lochplatte an dem der Druckkammer abgewandten Ende der Heizkammer ausgebildet wird, gefördert wird,
daß der adiabatisch komprimierte und gegen den an der Lochplatte ausgebildeten Staudruck durch die Heizkammer geförderte hochmolekulare Kunststoff entlang mindestens eines Transportweges von geringem Durchtrittsquerschnitt unter Erhaltung seines im wesentlichen kristallinen Zustandes auf eine Temperatur mindestens im erweichungsbereich des hochmolekularen Kunststoffes erwärmt wird,
daß der durch die Heizkammer geförderte, adiabatisch komprimierte, erwärmte, im wesentlichen kristalline hochmolekulare Kunststoff an der Lochplatte in eine Anzahl von Materialsträngen aufgeteilt wird, die der Anzahl von Durchtrittskanälen in der Lochplatte entspricht; und
daß der adiabatisch komprimierte und erwärmte, im wesentlichen kristalline hochmolekulare Kunststoff in einem Entspannungsraum im Innenraum des Formwerkzeuges entspannt wird, wobei sich die Materialstränge zu einer erweichten Masse vereinigen, die in der Profildüse spannungsfrei geformt wird.

Nach der Erfindung sind somit hochmolekulare und auch ultrahochmolekulare Kunststoffe wie Polyethylen in einer Druckkammer mit oszillierendem Kolben verarbeitbar, wie sie ähnlich zur Herstellung von vernetzten thermoplastischen Kunststoffen bekannt ist. In der erfindungsgemäßen Verbindung dieser Druckkammer mit einer Heizkammer, in der das Material durch den Strömungswiderstand des Verteilers weiter unter Druck gehalten wird, läßt sich eine kontinuierliche Verarbeitung solcher hochmolekularer Kunststoffe erzielen, die mit sehr viel größerer Geschwindigkeit, das heißt unter erheblich geringerem Zeitaufwand im Vergleich zu der Verarbeitung durch Pressung, spanabhebende Verarbeitung und Temperierung oder durch Ram-Extrusion 8 m/h erfolgt. Ein besonderer Vorteil der Erfindung besteht darin, daß so in kontinuierlicher Arbeitsweise hergestellte Halbzeug frei von mechanischen Spannungen ist und direkt für sienen jeweiligen Verwendungszweck eingesetzt werden kann. Als Beispiel dafür sei hier die Herstellung von Skibelägen erwähnt, die mit einer Geschwindigkeit von beispielsweise 120 m/h hergestellt werden können.

In Abhängigkeit von der Temperatur des Formwerkzeugs kann dabei unterschiedlichen Anforderungen Rechnung getragen werden: Wird das Formwerkzeug erwärmt, z. B. auf 200° C im Fall von ultrahochmolekularem Polyethylen, so erhält man ein spannungsfreies Produkt von mattem und samtigem Aussehen, das sehr gute Gleiteigenschaften besitzt, die möglicherweise durch die Mikrostruktur seiner Oberfläche bedingt sind. Wird das Formwerkzeug dagegen gekühlt, so wird ein Produkt mit sehr glatter, glänzender Oberfläche erhalten, das mit sehr großer Maßgenauigkeit gebildet wird.

Sie Ursachen für den Erfolg der erfindungsgemäßen Vorrichtung und des erfindungsgemäßen Verfahrens sind im einzelnen unbekannt. Es sei an dieser Stelle jedoch erwähnt, daß das adiabatisch komprimierte Material auf einem relativ langen Transportweg in relativ dünner Schicht durch die Heizkammer gefördert wird, so daß eine gleichmäßige Erwärmung auf die gewünschte Verarbeitungstemperatur erfolgt. Dabei wird das Material, das mit der erfindungsgemäßen Vorrichtung nach dem erfindungsgemäßen Verfahren verarbeitet wird, unter der Ausbildung des Staudrucks durch den Verteiler unter Druck gehalten und verbleibt damit mindestens beim Durchgang durch die Heizkammer im kristallinen Zustand. Sie Aufteilung des Materials in eine Vielzahl von Materialsträngen mittels der Verteilerplatte und gegebenenfalls auch die Verjüngung des Formwerkzeuges in Richtung von der Lochplatte zur Profildüse haben sich als besonders vorteilhaft erwiesen, offenbar deshalb, weil die Wiedervereinigung der Materialstränge unter der Vorschubwirkung des oszillierenden Kolbens unter gleichzeitiger Entspannung durch das am Ende offene Formwerkzeug die Ausbildung eines spannungsfreien Endproduktes ermöglicht. Das Material wird unter dem Druck des oszillierenden Kolbens ständig in das Formwerkzeug nachgefördert. Es wird dadurch eine Lunkerbildung im Formwerkzeug sicher ausgeschlossen und gleichzeitig damit eine nochgenaue Nachbildung aller Einzelheiten des Profils der Profildüse sichergestellt.

Ausführungsbeispiele der erfindungsgemäßen Vorrichtung sind in den Abbildungen dargestellt und werden nachfolgend im einzelnen anhand der Bezugszeichen erläutert und beschrieben.

### Kurze Beschreibung der Zeichnungen

Es zeigen
Figur 1 eine teilweise geschnittene Ansicht eines ersten Ausführungsbeispiels der Vorrichtung nach der Erfindung;
Figur 2 eine teilweise geschnittene Ansicht eines zweiten Ausführungsbeispiels der erfindungsgemäßen Vorrichtung; und
Figur 3 eine Schnittansicht des Innenkörpers der Heizkammern bei der Vorrichtung nach Figur 2.

### Bevorzugte Ausführung der Erfindung

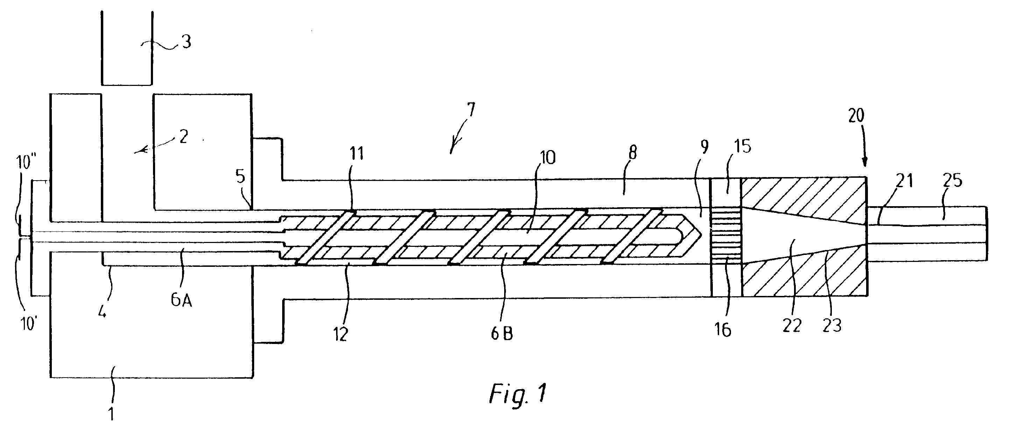

Figur 1 zeigt in teilweiser Schnittdarstellung ein erstes Ausführungsbeispiel der Vorrichtung zur Formgebung von Halbzeug aus hochmolekularen oder ultrahochmolekularen Kunststoffen wie Polyethylen. Man erkennt darin einen vorzugsweise aus geschmiedetem Stahl hergestellten Block 1, der eine Druckkammer 2 enthält, in die über eine nicht dargestellte, aber konventionelle Fülleinrichtung ein Granulat des Kunststoffes eingegeben wird. Mit der Druckkammer wirkt ein oszillierender Kolben 3 zusammen, der in der Weise angetrieben wird, wie das in der DE-PS 28 30 352 beschrieben ist. Durch den Kolben 3 wird das in die Druckkammer 2 eingeführte Material adiabatisch komprimiert und durch eine Umlenkung 4 gefördert, die in dem dargestellten Ausführungsbeispiel eine 90°-Biegung ist und einen Strömungswiderstand für das in die Druckkammer 2 eingeführte Material bildet. Durch den abgebogenen Teil der Druckkammer 2 erstreckt sich ein Kern 6A, der in den Metallblock 1 eingesetzt ist, durch den Aussang 5 der Druckkammer 2, so daß das adiabatisch komprimierte und dadurch vorgewärmte Material in Rohrform anfällt und in dieser Form durch die oszillierenden Bewegungen des Kolbens 3 kontinuierlich durch die Druckkammer 2 und deren Ausgang 5 gefördert wird.

An den Ausgang 5 der Druckkammer 2 schließt sich eine Heizkammer 7 an. Die Heizkammer 7 enthält einen beheizbaren Mantel 8, der einen Innenkanal 9 umgibt. In dem Innenkanal 9 befindet sich ein Innenkörper 6B, der mit dem Kern 6A aus einem Stück gebildet oder damit fest verbunden ist. Der Innenkörper 6B ist mit einem inneren Hohlraum 10 versehen, der mit einer Wärmequelle verbunden ist. Diese Wärmequelle kann bei dem Außenmantel 8 wie bei dem inneren Hohlraum 10 des Innenkörpers 6B eine elektrische Heizung sein, aber auch einen umlaufenden Wärmeträger darstellen, der mittels eines Thermostaten in üblicher Weise umgepumpt wird. Sie Versorgungsanschlüsse 10′ und 10˝ dafür sind an dem Kern 6A des Metallblocks 1 vorgesehen.

Der Innenkörper 6B ist außenseitig mit einer schraubenförmig gewundenen Rippe 11 versehen, durch die der Innenkörper 6B an der Innenwandung des Außenmantels 8 abgestützt ist. Es entsteht so ein schraubenförmig gewundener Transportweg 12 für das adiabatisch komprimierte Material, das aus dem Ausgang 5 der Druckkammer 2 austritt.

Der Transportweg 12 hat einen verhältnismäßig geringen Durchtrittsquerschnitt und durch den schraubenförmig gewundenen Verlauf eine relativ große Länge. Das adiabatisch komprimierte Material, das aus dem Ausgang 5 der Druckkammer 2 austritt, wird durch die oszillierenden Bewegungen des Kolbens entlang des schraubenförmig gewundenen Transportweges 12 durch die Heizkammer 7 gefördert und steht über dem ganzen Transportweg 12 in Wärmeaustauschverbindung mit der Heizkammer 7. Diese Heizkammer 7 wird auf eine Temperatur oberhalb von 200° C erwärmt, in dem speziellen Ausführungsbeispiel unter Verwendung von ultrahochmolekularem Polyethylen beträgt die Temperatur im Innenkanal 9 des Heizmantels 8 etwa 250° C. Nach dem Durchtritt durch die Heizkammer 7 ist das durch die Heizkammer 7 geförderte Material praktisch gleichmäßig auf diese Temperatur erwärmt.

An die Heizkammer 7 schließt sich ein Verteiler 15 in Gestalt einer Platte an, die mit einer Vielzahl von Durchtrittskanälen 16 versehen ist. Diese Durchtrittskanäle 16 sind vorzugsweise gleichförmig über den Querschnitt des Verteilers 15 verteilt. In dem dargestellten Ausführungsbeispiel bildet der Verteiler 15 eine Lochplatte mit gleichmäßig über die Lochplatte verteilten Durchbohrungen.

Unter der Wirkung des oszillierenden Kolbens 3 wird das adiabatisch komprimierte und in der Heizkammer 7 auf die vorerwähnte Temperatur erwärmte Material in eine Vielzahl von Materialsträngen aufgespalten, die in das an den Verteiler 15 anschließende Formwerkzeug 20 eintreten.

Das Formwerkzeug 20 enthält an dem der Verteilerplatte 15 abgewandten Ende eine Profildüse 21, die in Figur 1 nur schematisch dargestellt ist, aber jede gewünschte Profilform annehmen kann. In dem Bereich zwischen der Verteilerplatte 15 und der Profildüse 21 enthält das Formwerkzeug 20 einen Innenraum 22 mit einer Verjüngung in Richtung auf die Profildüse 21. In dem dargestellten Ausführungsbeispiel verjüngt sich der Innenraum 22 von der Eingangsseite her stetig bis auf die Maße der Profildüse 21.

Das Formwerkzeug 20 enthält an der Profildüse 21 eine konventionell aufgebaute und daher nur schematisch dargestellte Temperiervorrichtung 25, die beispielsweise mit einem Wärmeträger arbeitet, durch den die Profildüse 21 und das daraus austretende, geformte Halbzeug temperiert, d.h. erwärmt oder abgekühlt wird.

Während des Betriebs der vorstehend im Zusammenhang mit Figur 1 beschriebenen Vorrichtung wird der hochmolekulare Kunststoff, im Ausführungsbeispiel ultrahochmolekulares Polyethylen, das überwiegend im kristallinen Zustand vorliegt, in der Druckkammer 2 adiabatisch komprimiert. Der um den Kern 6A gebildete Ring aus dem adiabatisch komprimierten Material wird gegen den an dem Verteiler 15 bestehenden Staudruck und damit unter Druck entlang dem schraubenförmig gewundenen Transportweg 12 durch die Heizkammer 7 gefördert. Das Material wird dabei im wesentlichen gleichmäßig auf ca. 250° C erwärmt und behält unter dem bestehenden Druck im wesentlichen seinen kristallinen Zustand.

Die Vielzahl von Materialsträngen, die aus dem Verteiler 15 in den Innenraum 22 des Formwerkzeuges 20 unter Entspannung eintreten eintreten, werden unter der oszillierenden Wirkung des Kobens 3 und unter Entspannung durch den Innenraum 22 und die Profildüse 21 des Formwerkzeuges 20 gefördert. Die Materialstränge vereinigen sich unter diesen Bedingungen zu einem Halbzeug, das aus der Profildüse 21 austritt und praktisch gleichmäßig geformt und frei von mechanischen Spannungen ist. Auf diese Weise lassen sich zum Beispiel Skibeläge in unvergleichbar hohen Produktionsraten herstellen, und zwar in einer Qualität, die für die weitere Nutzung keine zeitraubenden Arbeitsgänge wie Tempern oder dergleichen erfordert.

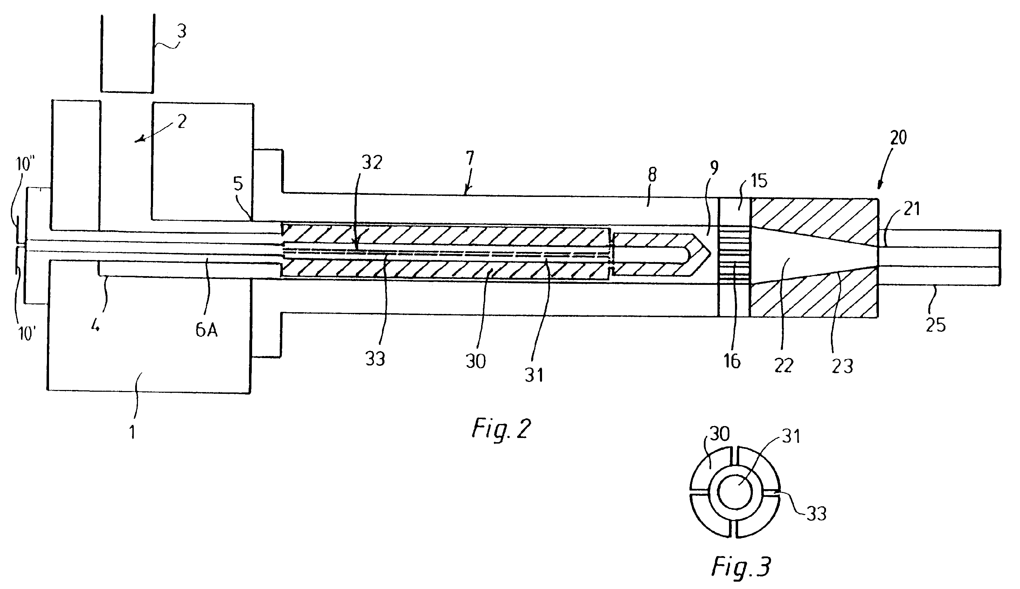

Ein zweites Ausführungsbeispiel der Vorrichtung ist in entsprechender Weise in Figur 2 dargestellt; darin sind gleiche oder entsprechende Teile mit den gleichen Bezugszeichen versehen wie in Figur 1.

Wie dort erkennt man in Figur 2 den Metallblock 1 mit der Druckkammer 2, dem oszillierenden Kolben 3, der Umlenkung 4, dem Kern 6A und dem Druckkammer-Ausgang 5. Wie dort, schließt sich an die Druckkammer 2 eine Heizkammer 7 aus einem Außenmantel 8 und einem Innenkanal 9 an. Der Heizkammer 7 folgt der Verteiler 15 mit den Durchgangskanälen 16, das Formwerkzeug 20 mit der Profildüse 21, dem Innenraum 22 und der Verjüngung 23, sowie die Kühlvorrichtung 25.

Die Ausführung nach Figur 2 unterscheidet sich von der in Figur 1 dargestellten Vorrichtung durch den Aufbau des Innenkörpers 30. Dieser Innenkörper 30 stützt sich an der Innenwandung des Heizmantels 8 ab und enthält einen inneren Hohlraum 31 zur Verbindung mit einer Wärmequelle über Versorgungsanschlüsse 10′ und 10˝, wie vorstehend in Verbindung mit Figur 1 beschrieben ist. Der Transportweg 32 wird bei dieser Ausführung von einer Anzahl Längskanälen 33 gebildet, die sich über einen wesentlichen Teil der Länge des Innenkörpers 30 erstrecken. Wie sich in der Querschnittsdarstellung in Figur 3 ergibt, sind insgesamt vier Längskanäle 33 vorgesehen, die radial in den Innenkörper 30 hineinverlaufen, aber vor dem inneren Hohlraum 31 enden. In dem dargestellten Ausführungsbeispiel sind die vier Längskanäle 33 in gleichen Winkelabständen über den Umfang des Innenkörpers 30 verteilt. Die Anordnung kann bei Bedarf aber auch so getroffen werden, daß eine größere oder kleinere Anzahl von Längskanälen 33 vorhanden ist, die ggf. auch anders in dem Innenkörper 30 verlaufen können.

Auch bei der Ausbildung des Innenkörpers nach Art des in Figur 2 dargestellten Innenkörpers 30 wird bei der Vorrichtung erreicht, daß ein günstiger Wärmeübergang von der Heizkammer 7 auf das adiabatisch komprimierte und dadurch vorgewärmte Material erfolgt, das dadurch praktisch gleichförmig auf die jeweils gewünschte Endtemperatur erwärmt wird. Insgesamt arbeitet die Vorrichtung nach Figur 2 nach dem gleichen Prinzip wie die in Figur 1 dargestellte Vorrichtung.

Die hochmolekularen oder ultrahochmolekularen Kunststoffe, die mit den vorstehend beschriebenen Vorrichtungen nach dem beschriebenen Verfahren zu Halbzeugprofilen verarbeitet werden, können auch Füllstoffe enthalten, beispielsweise feinteilige Carbide wie Borcarbid oder Wolframcarbid, keramische Füllstoffe, Mikro-Glasperlen, Graphit, oder Mineral- oder Kunststoffasern.

## Patentansprüche

1. Vorrichtung zur Formgebung von Halbzeug aus hochmolekularem Kunststoff, enthaltend eine Druckkammer (2) mit einem ersten Teil, der an eine Fülleinrichtung zur Zufuhr des hochmolekularen Kunststoffes angeschlossen ist und einen oszillierenden Kolben (3) zur adiabatischen Kompression des hochmolekularen Kunststoffes enthält, und mit einem abgebogenen zweiten Teil, der von einer Umlenkung (4) ausgeht, die einen Strömungswiderstand bildet, einen Kern (6A), der sich von dem Bereich der Umlenkung (4) durch den abgebogenen zweiten Teil der Druckkammer (2) erstreckt, eine an den abgebogenen zweiten Teil der Druckkammer (2) angeschlossene, von einem Mantel (8) umschlossene Heizkammer (7) und ein Formwerkzeug (20), das mit dem der Druckkammer (2) abgewandten Ende der Heizkammer (7) verbunden ist,
gekennzeichnet durch eine zwischen dem der Druckkammer (2) abgewandten Ende der Heizkammer (7) und dem Formwerkzeug (20) angeordnete Lochplatte (15) mit gleichmäßig über deren Querschnitt verteilten Durchtrittskanälen (16) zur Ausbildung eines Staudruckes und zur Aufspaltung des durch die Heizkammer (7) gegen den an der Lochplatte (15) ausgebildeten Staudruck geförderten hochmolekularen Kunststoffes in eine Anzahl von Materialsträngen, die der Zahl der Durchtrittskanäle (16) in des Lochplatte (15) entspricht,
einen die Heizkammer (7) durchsetzenden Innenkörper (6B, 30), der mit dem Mantel (8) mindestens einen Transportweg (12, 32) von geringem Durchtrittsquerschnitt bestimmt, entlang dem der gegen den an der Lochplatte (15) ausgebildeten Staudruck geförderte, hochmolekulare Kunststoff unter Erhaltung seines im wesentlichen kristallinen Zustandes auf eine Temperatur mindestens im Erweichungsbereich des hochmolekularen Kunststoffes erwärmbar ist, und
ein im Innenraum (22) des Formwerkzeuges (20) ausgebildeter, des Lochplatte (15) in Förderrichtung folgender Entspannungsraum, in dem sich die Materialstränge des hochmolekularen Kunststoffes unter Entspannung und Ausdehnung zu einer erweichten Masse vereinigen.

2. Vorrichtung nach Anspruch 1, dadurch gekennzeichnet, daß der Innenkörper (6B, 30) mit einer inneren Wärmequelle verbunden ist.

3. Vorrichtung nach Anspruch 1 oder 2, dadurch gekennzeichnet, daß der Innenkörper (6B) mit einer schraubenförmig gewundenen Rippe (11) versehen ist, mit der sich der Innenkörper (6B) innenseitig an dem Mantel (8) der Heizkammer (7) abstützt und die einen schraubenförmig gewundenen Transportweg (12) bestimmt.

4. Vorrichtung nach Anspruch 2, dadurch gekennzeichnet, daß der Innenkörper (30) über einen wesentlichen Teil seiner Länge unfangsmäßig innenseitig mit mindestens einem vom Umfang her radial verlaufenden, den Transportweg (32) bestimmenden Längskanal (33) versehen ist.

5. Vorrichtung nach Anspruch 4, dadurch gekennzeichnet, daß vier vom Umfang her radial verlaufende Längskanäle (33) vorgesehen und gleichmäßig über den Umfang des Innenkörpers (30) verteilt sind.

6. Vorrichtung nach einem der Ansprüche 1 bis 5, dadurch gekennzeichnet, daß sich das Formwerkzeug (20) zu einer Profildüse (21) hin verjüngt.

7. Verfahren zur Herstellung von Halbzeug vorgegebener Form aus hochmolekularen Kunststoffen, bei dem der hochmolekulare Kunststoff unter Einwirkung eines oszillierenden Kolbens (3) in einem ersten Teil einer Druckkammer (2) adiabatisch komprimiert und anschliessend nacheinander gegen den Strömungswiderstand einer Umlenkung (4) durch einen abgebogenen zweiten Teil der Druckkammer (2) und darin um einen Kern (6A), der sich von dem Bereich der Umlenkung (4) durch den abgebogenen zweiten Teil der Druckkammer (2) erstreckt, in eine Heizkammer (7) und durch einen Innenkanal (9) zwischen einem Mantel (8) und einem mit dem Kern (6A) verbundenen Innenkörper (6B, 30) der Heizkammer (7) und durch ein Formwerkzeug (20) gefördert wird,
dadurch gekennzeichnet,
daß der adiabatisch komprimierte hochmolekulare Kunststoff durch die Heizkammer (7) gegen einen Staudruck, der durch eine Lochplatte (15) an dem der Druckkammer (2) abgewandten Ende der Heizkammer (7) ausgebildet wird, gefördert wird,
daß der adiabatisch komprimierte und gegen den an der Lochplatte (15) ausgebildeten Staudruck durch die Heizkammer (7) geförderte hochmolekulare Kunststoff entlang mindestens eines Transportweges (12, 32) von geringem Durchtrittsquerschnitt unter Erhaltung seines im wesentlichen kristallinen Zustandes auf eine Temperatur mindestens im Erweichungsbereich des hochmolekularen Kunststoffes erwärmt wird,
daß der durch die Heizkammer (7) geförderte, adiabatisch komprimierte, erwärmte, im wesentlichen kristalline hochmolekulare Kunststoff an der Lochplatte (15) in eine Anzahl von Materialsträngen aufgeteilt wird, die der Anzahl von Durchtrittskanälen (16) in der Lochplatte (15) entspricht; und
daß der adiabatisch komprimierte und erwärmte, im wesentlichen kristalline hochmolekulare Kunststoff in einem Entspannungsraum im Innenraum (22) des Formwerkzeuges (20) entspannt wird, wobei sich die Materialstränge zu einer erweichten Masse vereinigen, die in der Profildüse (21) spannungsfrei geformt wird.

8. Verfahren nach Anspruch 7, dadurch gekennzeichnet, daß der adiabatisch komprimierte, hochmolekulare Kunststoff in der Heizkammer (7) entlang einem schraubenförmig gewundenen Transportweg (12) von geringem Durchtrittsquerschnitt gefördert wird.

9. Verfahren nach Anspruch 7, dadurch gekennzeichnet, daß der adiabatisch komprimierte, hochmolekulare Kunststoff in der Heizkammer (7) durch wenigstens einen radial verlaufenden Längskanal (33) des Innenkörpers (30) gefördert wird, der einen Transportweg (32) von geringem Durchtrittsquerschnitt bestimmt.

10. Verfahren nach einem der Ansprüche 7 bis 9, dadurch gekennzeichnet, daß der adiabatisch komprimierte, hochmolekulare Kunststoff beim Durchtritt durch die Heizkammer (7) auf Temperaturen im Bereich von 200° C bis 250° C erwärmt wird.

11. Verfahren nach einem der Ansprüche 7 bis 10, dadurch gekennzeichnet, daß der adiabatisch komprimierte, hochmolekulare Kunststoff durch den in der Druckkammer (2) oszillierenden Kolben (3) unter Ausgleich des Schrumpfschwundes in das Formwerkzeug (20) nach-gefördert wird.

12. Verfahren nach einem der Ansprüche 7 bis 11, dadurch gekennzeichnet, daß das Formwerkzeug (20) erwärmt wird.

13. Verfahren nach einem der Ansprüche 7 bis 11, dadurch gekennzeichnet, daß das Formwerkzeug (20) gekühlt wird.

## Claims

1. Apparatus for shaping semifinished products made of high molecular weight plastics material, containing a pressure chamber (2) including a first portion which is connected to fill means for infeeding the high molecular weight plastics material and which contains an oscillating piston (3) for adiabatically compressing the high molecular weight plastics material, and a bent-off second portion which extends from a deflection (4) forming a flow resistance, a core member (6A) extending from the area of the deflection through the bent-off second portion of the pressure chamber (2), a heating chamber (7) connected to the bent-off second portion of the pressure chamber (2) and surrounded by a jacket (8), and a form tool (20) which is connected to the pressure chamber (2) at the end thereof remote from the heating chamber (7),
characterised by an apertured plate (15) disposed intermediate the end of the heating chamber (7), which end is remote from the pressure chamber (2), and the form tool (20), said apertured plate containing throughpass passages (16) which are uniformly distributed across the apertured plate, for providing a back pressure and dividing the high molecular weight plastics material which is fed through the heating chamber (7) against the back pressure built up at the apertured plate (15), into a number of material strands, said number of material strands corresponding to the number of throughpass passages (16) formed in the apertured plate (15),
an internal body (6B,30) throughpassing the heating chamber (7) and defining conjointly with the jacket (8) at least one conveying path (12,32) of small cross-sectional throughpass area, the high molecular weight plastics material while being fed along the conveying path against said back pressure built up at said apertured plate (15) and maintained in its essentially crystalline state, being heatable to a temperature at least in the softening range of the high molecular weight plastics material, and
a relaxation space formed within the interior space (22) of the form tool (20) and following the apertured plate (15) in the conveying direction, said material strands of the high molecular weight plastics material relaxing, expanding and merging in said relaxation space to form a softened mass.

2. Apparatus according to claim 1, characterised in that the internal body (6B,30) is connected to an internal heat source.

3. Apparatus according to claim 1 or 2, characterised in that the internal body (6B) is provided with a helically wound rib (11) by means of which the internal body (6B) is supported at the inside of the jacket (8) of the heating chamber (7) and which defines a helically wound conveying path (12).

4. Apparatus according to claim 2, characterised in that the internal body (30) is circumferentially provided with at least one lengthwise channel (33) which extends on the inside radially from the circumference of said internal body along a substantial portion of its length and defines the conveying path (32).

5. Apparatus according to claim 4, characterised in that there are provided four lengthwise channels (33) which extend radially from the circumference and which are uniformly distributed across the circumference of the internal body (30).

6. Apparatus according to any one of claims 1 to 5, characterised in that the form tool (20) tapers towards a profile nozzle (21).

7. Method of producing semifinished products made of high molecular weight plastics material and having a predetermined shape, in which method the high molecular weight plastics material is adiabatically compressed in a first portion of a pressure chamber (2) under the action of an oscillating piston (3) and thereafter is successively conveyed against the flow resistance of a deflection (4) through a bent-off second portion of the pressure chamber (2) and therein around a core member (6A) which extends from the area of the deflection (4) through the bent-off second portion of the pressure chamber (2), into a heating chamber (7) and through an internal channel (9) defined between a jacket (8) and an internal body (6B, 30) of the heating chamber (7) which internal body is connected to the core member (6A), and through a form tool (20),
characterised in
that the adiabatically compressed high molecular weight plastics material is conveyed through the heating chamber (7) against a back pressure which is built up at the end of the heating chamber (7) which end is remote from the pressure chamber (2), by means of an apertured plate (15),
that the adiabatically compressed high molecular weight plastics material which is conveyed through the heating chamber (7) against the back pressure built up at the apertured plate (15), is heated to a temperature at least in the softening range of the high molecular weight plastics material while maintaining its substantially crystalline state, along at least one conveying path (12, 32) of small cross-sectional throughpass area,
that the adiabatically compressed and heated, substantially crystalline high molecular weight plastics material which is conveyed through the heating chamber (7), is divided at the apertured plate (15) into a number of material strands corresponding to the number of throughpass passages (16) provided in the apertured plate (15), and
that the adiabatically compressed and heated, substantially crystalline high molecular weight plastics material is relaxed in a relaxation space provided in the interior (22) of the form tool (20) whereby the material strands merge to a softened mass which is shaped in the profile nozzle (21) in a stress-free manner.

8. Method according to claim 7, characterised in that the adiabatically compressed high molecular weight plastics material is conveyed along a helically wound conveying path (12) of small cross-sectional throughpass area in the heating chamber (7).

9. Method according to claim 7, characterised in that the adiabatically compressed high molecular weight plastics material is conveyed in the heating chamber (7) through at least one lengthwise channel (33) of the internal body (30), said lengthwise channel extending radially and defining a conveying path (32) of small cross-sectional throughpass area.

10. Method according to any one of claims 7 to 9, characterised in that the adiabatically compressed high molecular weight plastics material is heated to temperatures in the range of 200°C to 250°C while passing through the heating chamber (7).

11. Method according to any one of claims 7 to 10, characterised in that the adiabatically compressed high molecular weight plastics material is supplementary conveyed into the form tool (20) by means of the piston (3) oscillating in the pressure chamber (2), in order to compensate for contraction.

12. Method according to any one of claims 7 to 11, characterised in that the form tool (20) is heated.

13. Method according to any one of claims 7 to 11, characterised in that the form tool (20) is cooled.

## Revendications

1. Dispositif destiné à la conformation de produits semi-finis en matière plastique à hautes molécules, comprenant une chambre de pression (2) ayant une première partie raccordée à un dispositif de remplissage destiné à l'alimentation de la matière platique à hautes molécules, et un piston oscillant (3) destiné à la compression adiabatique de la matière plastique à hautes molécules, et ayant une seconde partie courbée partant d'une déviation (4) formant une résistance d'écoulement, un noyau (6A) s'étendant du domaine de la déviation (4) à travers la seconde partie courbée de la chambre de pression (2), une chambre de chauffage (7) entourée d'une chemise (8) et raccordée à la seconde partie courbée de la chambre de pression (2), et un outil de formage (20) relié à l'extrémité de la chambre de chauffage (7), qui est opposée à la chambre de pression (2),
caractérisé par un tas-étampe (15) disposé entre l'extrémité de la chambre de chauffage (7) opposée à la chambre de pression (2), et l'outil de formage (20), et présentant des canaux de passage (16) répartis régulièrement sur sa coupe transversale afin de former une pression dynamique et de fendre la matière plastique à hautes molécules transportée à travers la chambre de chauffage (7) contre la pression dynamique formée au tas-étampe, en un nombre de troncons de matériau égal au nombre de canaux de passage (16) du tas-étampe (15),
un corps intérieur (6B,30) traversant la chambre de chauffage (7) et déterminant avec la chemise (8) au moins une voie de transport (12,32) à faible coupe transversale de passage, voie de transport le long de laquelle la matière plastique à hautes molécules tranportée contre la pression dynamique formée au tas-étampe (15), peut être chauffée à une température au moins dans la zone de ramollissement de la matière plastique à hautes molécules tout en maintenant son état essentiellement cristallin, et
un espace de détente formé dans l'espace intérieur (22) de l'outil de formage (20) et suivant le tas-étampe (15) dans la direction de transport, dans lequel les trancons de matériau de la matière plastique à hautes molécules se réunissent en se détendant et en se dilatant de sorte à former une masse ramollie.

2. Dispositif selon la revendication 1, caractérisé par le fait que le corps intérieur (6B,30) est relié à une source de chaleur intérieure.

3. Dispositif selon la revendication 1 ou 2, caractérisé par le fait que le corps intérieur (6B) est muni d'une nervure hélicoidale (11) avec laquelle le corps intérieur (6B) est supporté sur le côté intérieur par la chemise (8) de la chambre de chauffage (7), et qui détermine une voie de transport hélicoidale (12).

4. Dispositif selon la revendication 2, caractérisé par le fait que le corps intérieur (30) est muni sur la circonférence du côté intérieur sur une partie essentielle de sa longueur, d'au moins d'un canal longitudinal (33) s'étendant radialement de la circonférence et déterminant la voie de transport (32).

5. Dispositif selon la revendication 4, caractérisé par le fait qu'on a prévu quatre canaux longitudinaux (33) s'étendant radialement de la circonférence et réparties régulièrement sur la circonférence du corps intérieur (30).

6. Dispositif selon l'une des revendications 1 à 5, caractérisé par le fait que l'outil de formage (20) se rétrécit de sorte à former une tuyère profilée (21).

7. Procédé destiné à la fabrication de produits semi-finis d'une forme prédéterminée en matière plastique à hautes molécules, dans lequel la matière plastique à hautes molécules est adiabatiquement comprimée sous l'action d'un piston oscillant (3) dans une première partie d'une chambre de pression (2), et ensuite transportée successivement contre la résistance d'écoulement d'une déviation (4) à travers une seconde partie courbée de la chambre de pression (2) et dans celle-ci, autour d'un noyau (6A) s'étendant du domaine de la déviation (4) à travers la seconde partie courbée de la chambre de pression (2), dans une chambre de chauffage (7), et par un canal intérieur (9) entre une chemise (8) et un corps intérieur (6B,30) de la chambre de chauffage (7), qui est relié au noyau (6A), et par un outil de formage (20),
caractérisé par le fait que la matière plastique à hautes molécules adiabatiquement comprimée est transportée à travers la chambre de chauffage (7) contre une pression dynamique formée par un tas-étampe (15) à l'extrémité de la chambre de chauffage (7) qui est opposée à la chambre de pression (2),
que la matière plastique à hautes molécules adiabatiquement comprimée et transportée contre la pression dynamique formée au tas-étampe (15) à travers la chambre de chauffage (7), est chauffée le long d'une voie de transport (12,32) à faible coupe transversale de passage à une température au moins dans la zone de ramollissement de la matière plastique à hautes molécules tout en maintenant son état essentiellement cristallin,
que la matière plastique à hautes molécules essentiellement cristallin, adiabatiquement comprimée et chauffée, transportée à travers la chambre de chauffage (7) est fendue au tas-étampe (15) en un nombre de troncons de matériau égal au nombre de canaux de passage (16) dans le tas-étampe (15), et
que la matière plastique à hautes molécules essentiellement cristallin, adiabatiquement comprimée et chauffée, est detendue dans un espace de détente dans l'espace intérieur (22) de l'outil de formage (20), les trancons de matériau se réunissant de sorte à former une masse ramollie formée sans tension dans la tuyère profilée (21).

8. Procédé selon la revendication 7, caractérisé par le fait que la matière plastique à hautes molécules, adiabatiquement comprimée est transportée dans la chambre de chauffage (7) le long d'une voie de transport hélicoidale (12) d'une faible coupe transversale de passage.

9. Procédé selon la revendication 7, caractérisé par le fait que la matière plastique à hautes molécules adiabatiquement comprimée est transportée par au moins un canal longitudinal (33) s'étendant radialement du corps intérieur (30) et déterminant une voie de transport (32) d'une faible coupe transversale de passage.

10. Procédé selon l'une des revendications 7 à 9, caractérisé par le fait que la matière plastique à hautes molécules adiabatiquement comprimée est chauffée lors du passage à travers la chambre de chauffage (7) à des températures dans le domaine de 200°C à 250°C.

11. Procédé selon l'une des revendications 7 à 10, caractérisé par le fait que la matière plastique à hautes molécules adiabatiquement comprimée est transportée postérieurement par le piston (3) oscillant dans la chambre de pression (2), dans l'outil de formage (20) en équilibrant la perte par contraction.

12. Procédé selon l'une des revendications 7 à 11, caractérisé par le fait que l'outil de formage (20) est chauffé.

13. Procédé selon l'une des revendications 7 à 11, caractérisé par le fait que l'outil de formage (20) est refroidi.
